# EUROPÄISCHE PATENTSCHRIFT

(11) **EP 2 025 120 B1**
(45) Veröffentlichungstag und Bekanntmachung des Hinweises auf die Patenterteilung: **27.06.2018**
(21) Anmeldenummer: 07729476.7
(22) Anmeldetag: 24.05.2007
(51) Int. Cl.: H04W 12/04, H04W 12/06, H04L 29/06, H04W 80/04

(54) **VERFAHREN UND SYSTEM ZUM BEREITSTELLEN EINES MOBILE IP SCHLÜSSELS**
METHOD AND SYSTEM FOR PROVIDING A MOBILE IP KEY
PROCÉDÉ ET SYSTÈME DE FOURNITURE D'UNE CLÉ IP MOBILE

(30) Priorität: 01.06.2006 DE 102006025690; 08.06.2006 DE 102006026737; 10.07.2006 DE 102006031870
(43) Veröffentlichungstag der Anmeldung: 18.02.2009
(73) Patentinhaber: Siemens Aktiengesellschaft, 80333 München (DE)
(72) Erfinder: FALK, Rainer, 85435 Erding (DE); KRÖSELBERG, Dirk, 80469 München (DE)
(86) Internationale Anmeldenummer: PCT/EP2007/055045
(87) Internationale Veröffentlichungsnummer: WO 2007/137987

(56) Entgegenhaltungen:
- EP-A- 1 657 877
- MADJID NAKHJIRI NARAYANAN VENKITARAMAN MOTOROLA LABS: "EAP based Proxy Mobile IP key bootstrapping: A WiMAX applicability example; draft-nakhjiri-pmip-key-02.txt" IETF STANDARD-WORKING-DRAFT, INTERNET ENGINEERING TASK FORCE, IETF, CH, Nr. 2, Februar 2006 (2006-02), XP015044436 ISSN: 0000-0004

## Beschreibung

Die Erfindung betrifft ein Verfahren und ein System zum Bereitstellen eines Mobile IP Schlüssels, insbesondere für WiMax-Netze.

Das Internet mit dem TCP/IP-Protokoll bietet eine Plattform für die Entwicklung höherer Protokolle für den mobilen Bereich. Da die Internet-Protokolle weit verbreitet sind, kann mit entsprechenden Protokollerweiterungen für mobile Umgebungen ein großer Anwenderkreis erschlossen werden. Die herkömmlichen Internet-Protokolle sind jedoch ursprünglich nicht für den mobilen Einsatz konzipiert. In der Paketvermittlung des herkömmlichen Internets werden die Pakete zwischen stationären Rechnern ausgetauscht, die weder ihre Netzwerkadresse ändern noch zwischen verschiedenen Subnetzen wandern. Bei Funknetzen mit mobilen Endgeräten bzw. Rechnern, werden mobile Rechner MS (Mobile Station) häufig in verschiedene Netzwerke eingebunden. Das DHCP (Dynamic Host Configuration Protocol) ermöglicht mit Hilfe eines entsprechenden Servers die dynamische Zuweisung einer IP-Adresse und weiterer Konfigurationsparameter an einen Rechner in einem Netzwerk. Ein Rechner, der in ein Netzwerk eingebunden wird, bekommt automatisch eine freie IP-Adresse durch das DHCP-Protokoll zugewiesen. Hat ein mobiler Rechner DHCP installiert, muss er lediglich in Reichweite eines lokalen Netzwerkes kommen, das die Konfiguration über das DHCP-Protokoll unterstützt. Bei dem DHCP-Protokoll ist eine dynamische Adressvergabe möglich, d.h. eine freie IP-Adresse wird automatisch für eine bestimmte Zeit zugeteilt. Nach Ablauf dieser Zeit muss die Anfrage durch den mobilen Rechner MS entweder erneut gestellt werden oder die IP-Adresse kann anderweitig vergeben werden.

Mit DHCP kann ein mobiler Rechner MS ohne manuelle Konfiguration in ein Netzwerk eingebunden werden. Als Voraussetzung muss lediglich ein DHCP-Server zur Verfügung stehen. Ein mobiler Rechner MS kann so Dienste des lokalen Netzwerkes benutzen und beispielsweise zentral abgelegte Dateien benutzen. Bietet ein mobiler Rechner MS jedoch selbst Dienste an, kann ein potentieller Dienstnutzer den mobilen Rechner MS nicht auffinden, da sich dessen IP-Adresse in jedem Netzwerk, in das der mobile Rechner eingebunden wird, ändert. Das gleiche geschieht, wenn sich eine IP-Adresse während einer bestehenden TCP-Verbindung ändert. Dies führt zum Abbruch der Verbindung. Daher bekommt bei Mobile-IP ein mobiler Rechner MS eine IP-Adresse zugewiesen, die er auch in einem anderen Netzwerk behält. Bei herkömmlichem IP-Netzwechsel ist es nötig, die IP Adressen-Einstellungen entsprechend anzupassen. Eine ständige Anpassung von IP- und den herkömmlichen automatischen Konfigurationsmechanismen wird die bestehende Verbindung bei einem Wechsel der IP-Adresse unterbrochen. Das MIP-Protokoll (RFC2002, RFC2977, RFC3344, RFC3846, RFC3957, RFC3775, RFC3776, RFC4285) unterstützt die Mobilität von mobilen Endgeräten MS. Bei den herkömmlichen IP-Protokollen muss das mobile Endgerät MS jedes Mal seine IP-Adresse anpassen, wenn es das IP-Subnetz wechselt, damit die an das mobile Endgerät MS adressierten Datenpakete richtig geroutet werden. Um eine bestehende TCP-Verbindung aufrecht zu erhalten, muss das mobile Endgerät MS sein IP-Adresse beibehalten, da ein Adressenwechsel zu einer Unterbrechung der Verbindung führt. Das MIP-Protokoll ermöglicht eine transparente Verbindung zwischen den beiden Adressen, nämlich einer permanenten Home-Adresse und einer zweiten temporären Care-Off-Adresse. Die Care-Off-Adresse ist diejenige IP-Adresse unter der das mobile Endgerät MS aktuell erreichbar ist.

Ein Heimagent (Home Agent) HA ist ein Stellvertreter des mobilen Endgerätes MS, solange sich das mobile Endgerät MS nicht in dem ursprünglichen Heimnetz aufhält. Der Heimagent ist ständig über den aktuellen Aufenthaltsort des mobilen Rechners MS informiert. Der Heimagent HA stellt üblicherweise eine Komponente eines Routers im Heimnetz des mobilen Endgerätes dar. Wenn das mobile Endgerät MS sich außerhalb des Heimnetzes befindet, stellt der Heimagent HA eine Funktion bereit, damit sich das mobile Endgerät MS anmelden kann. Dann leitet der Heimagent HA die an das mobile Endgerät MS adressierten Datenpakete in das aktuelle Subnetz des mobilen Endgerätes MS weiter.

Ein Fremdagent (Foreign Agent) FA befindet sich in dem Subnetz, in dem sich das mobile Endgerät MS bewegt. Der Fremdagent FA leitet eingehende Datenpakete an das mobile Endgerät MS bzw. an den mobilen Rechner MS weiter. Der Fremdagent FA befindet sich in einem so genannten Fremdnetz (Visited Network). Der Fremdagent FA stellt ebenfalls üblicherweise eine Komponente eines Routers dar. Der Fremdagent FA routet alle administrativen Mobile-Datenpakete zwischen dem mobilen Endgerät MS und dessen Heimagenten HA. Der Fremdagent FA entpackt die von dem Heimagent HA gesendeten, getunnelten IP-Datenpakete und leitet deren Daten an das mobile Endgerät MS weiter.

Die Heimadresse des mobilen Endgerätes MS ist eine Adresse, unter der das mobile Endgerät MS permanent erreichbar ist. Die Heimadresse hat dasselbe Adressenpräfix wie der Heimagent HA. Die Care-Of-Adresse ist diejenige IP-Adresse, die das mobile Endgerät MS in dem fremden Netz verwendet.

Der Heimagent HA pflegt eine so genannten Mobilitätsanbindungstabelle (MBT: Mobility Binding Table). Die Einträge in dieser Tabelle dienen dazu, die beiden Adressen, d.h. die Heimadresse und die Care-Of-Adresse, eines mobilen Endgeräts MS einander zuzuordnen und die Datenpakete entsprechend umzuleiten.

Die MBT-Tabelle enthält Einträge über die Heimadresse, die Care-Of-Adresse und eine Angabe über die Zeitspanne, in der diese Zuordnung gültig ist (Life Time).

Figur 1 zeigt ein Beispiel für eine Mobilitätsanbindungstabelle MBT nach dem Stand der Technik.

Der Fremdagent FA enthält eine Besucherliste bzw. Visitor List (VL: Visitor List), die Informationen über die mobilen Endgeräte MS enthält, die sich gerade in dem IP-Netz des Fremdagenten FA befinden.

Figur 2 zeigt ein Beispiel für eine derartige Besucherliste nach dem Stand der Technik.

Damit ein mobiler Rechner MS in ein Netz eingebunden werden kann, muss er zunächst in Erfahrung bringen, ob er sich in seinem Heim- oder Fremdnetz befindet. Zusätzlich muss das mobile Endgerät MS in Erfahrung bringen, welcher Rechner in dem Subnetz des Heim- bzw. der Fremdagent ist. Diese Informationen werden durch so genanntes Agent Discovery ermittelt.

Durch die nachfolgende Registrierung kann das mobile Endgerät MS seinen aktuellen Standort seinem Heimagenten HA mitteilen. Hierzu sendet der mobile Rechner bzw. das mobile Endgerät MS dem Heimagenten die aktuelle Care-Of-Adresse zu. Zur Registrierung sendet der mobile Rechner MS einen Registration-Request bzw. eine Registrierungsanforderung an den Heimagenten. Der Heimagent HA trägt die Care-Of-Adrese in seine Liste ein und antwortet mit einem Registration Reply bzw. einer Registrierungsantwort. Hierbei besteht allerdings ein Sicherheitsproblem. Da prinzipiell jeder Rechner an einem Heimagenten HA eine Registrierungsanforderung schicken kann, könnte man auf einfache Weise einem Heimagenten HA vorspiegeln, ein Rechner habe sich in ein anderes Netzwerk bewegt. So könnte ein fremder Rechner alle Datenpakete eines mobilen Rechners bzw. mobilen Endgerätes MS =übernehmen, ohne dass ein Sender davon erfährt. Um dies zu verhindern, verfügen der mobile Rechner MS und der Heimagent HA über gemeinsame geheime Schlüssel. Kehrt ein mobiler Rechner MS in sein Heimatnetzwerk zurück, deregistriert er sich beim Heimagenten HA, da der mobile Rechner MS nunmehr alle Datenpakete selbst entgegennehmen kann. Ein mobiles Funknetz muss unter anderem folgende Sicherheitseigenschaften aufweisen. Informationen dürfen nur für gewünschte Kommunikationspartner zugänglich gemacht werden, d.h. nicht gewünschte Mithörer dürfen keinen Zugriff auf übertragene Daten erhalten. Das mobile Funknetz muss also die Eigenschaft der Vertraulichkeit (Confidentiality) aufweisen. Daneben muss Authentizität gegeben sein. Die Authentizität (Authenticity) erlaubt es einem Kommunikationspartner zweifelsfrei festzustellen, ob eine Kommunikation tatsächlich zu einem gewünschten Kommunikationspartner aufgebaut wurde oder ob sich eine fremde Partei als Kommunikationspartner ausgibt. Authentifizierungen können pro Nachricht oder pro Verbindung durchgeführt werden. Wird auf Basis von Verbindungen authentifiziert, wird nur einmal zu Anfang einer Sitzung (Session) der Kommunikationspartner identifiziert. Man geht dann für den weiteren Verlauf der Sitzung davon aus, dass die folgenden Nachrichten weiterhin von dem entsprechenden Sender stammen. Selbst wenn die Identität eines Kommunikationspartners feststeht, d.h. der Kommunikationspartner authentifiziert ist, kann der Fall auftreten, dass dieser Kommunikationspartner nicht auf alle Ressourcen zugreifen darf bzw. nicht alle Dienste über das Netzwerk benutzen darf. Eine entsprechenden Autorisation setzt in diesem Fall eine vorhergehende Authentifizierung des Kommunikationspartners voraus.

Bei mobilen Datennetzen müssen Nachrichten längere Strecken über Luftschnittstellen zurücklegen und sind somit für potentielle Angreifer leicht erreichbar. Bei mobilen und drahtlosen Datennetzen spielen daher Sicherheitsaspekte eine besondere Rolle. Ein wesentliches Mittel zur Erhöhung der Sicherheit in Datennetzwerken stellen Verschlüsslungstechniken dar. Durch die Verschlüsselung ist es möglich, Daten über unsichere Kommunikationswege, beispielsweise über Luftschnittstellen, zu übertragen, ohne dass unbefugte Dritte Zugriff auf die Daten erlangen. Zum Verschlüsseln werden die Daten, d.h. der so genannte Klartext mit Hilfe eines Verschlüsselungsalgorithmus in Chiffre-Text transformiert. Der verschlüsselte Text kann über den unsicheren Datenübertragungskanal transportiert und anschließend entschlüsselt bzw. dechiffriert werden.

Als eine viel versprechende drahtlose Zugangstechnologie wird WiMax (Worldwide Interoperability for Microwave Access) als neuer Standard vorgeschlagen, der für die Funkübertragung IEEE 802.16 verwendet. Mit WiMax sollen mit Sendestationen ein Beriech von bis zu 50 km mit Datenraten von über 100 Mbit pro Sekunde versorgt werden.

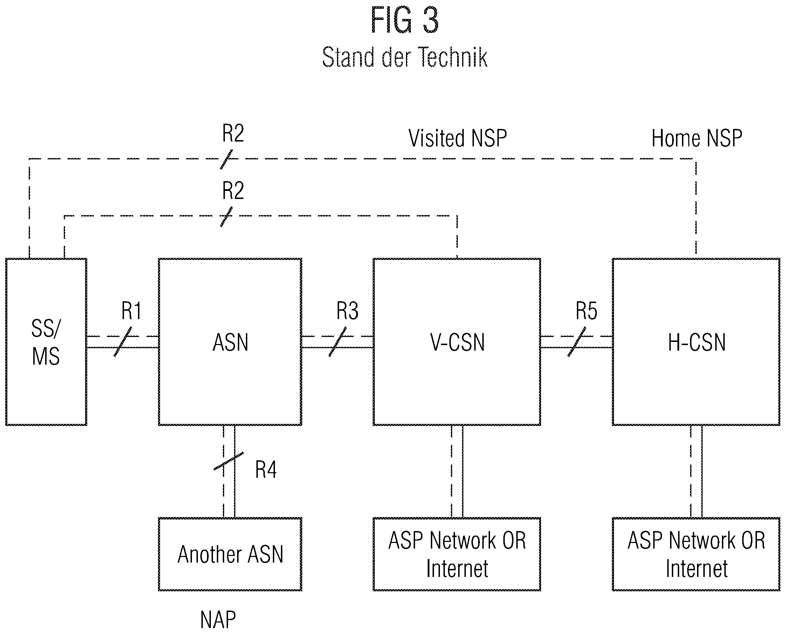

Figur 3 zeigt ein Referenzmodel für ein WiMax-Funknetzwerk. Ein mobiles Endgerät MS befindet sich im Bereich eines Zugangsnetzwerkes (ASN: Access Serving Network). Das Zugangsnetz ASN ist über mindestens ein besuchtes Netz (Visited Connectivity Service Network VCSN) bzw. Zwischennetz mit einem Heimnetz HCSN (Home Connectivity Service Network) verbunden. Die verschiedenen Netzwerke sind über Schnittstellen bzw. Referenzpunkte R miteinander verbunden. Der Heimagent HA der Mobilstation MS befindet sich in dem Heimnetz (HCSN) oder in einem der besuchten Netze (VCSN).

WiMax unterstützt zwei Realisierungsvarianten von Mobile IP, nämlich ein so genanntes Client MIP (CMIP), bei dem die Mobilstation MS selbst die MIP-Clientfunktion realisiert, und Proxy-MIP (PMIP), bei dem die MIP-Client-Funktion durch das WiMax-Zugangsnetz ASN realisiert ist. Die dazu im ASN vorgesehen Funktionalität wird als Proxy Mobile Node (PMN) oder als PMIP-Client bezeichnet. Dadurch kann MIP auch mit Mobilstationen MS verwendet werden, die selbst kein MIP unterstützen.

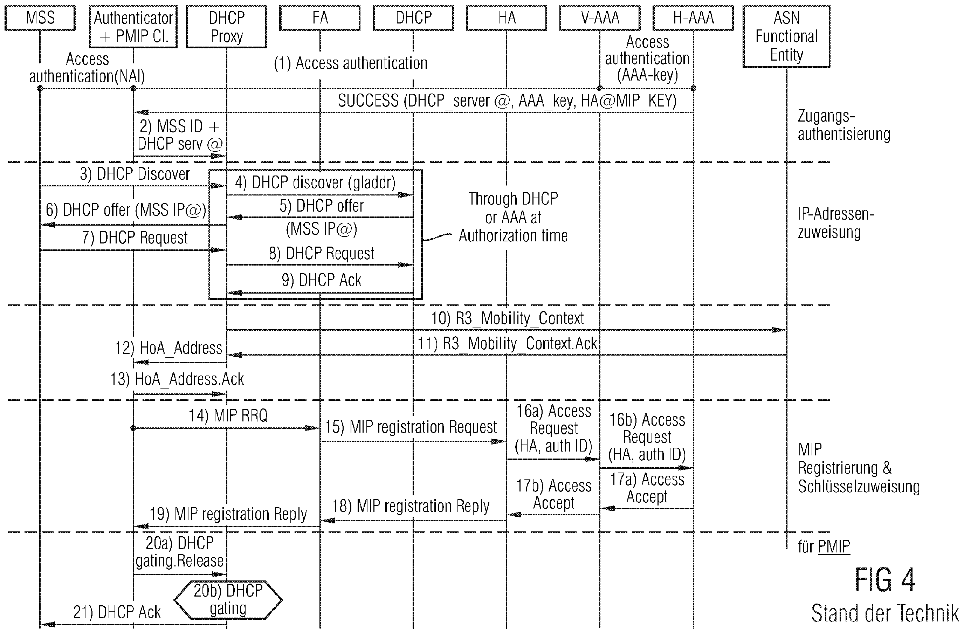

Figur 4 zeigt den Verbindungsaufbau bei Proxy-MIP (PMIP), wenn sich der Heimagent HA in dem besuchten Netzwerk VCSN befindet, nach dem Stand der Technik.

Nach Aufbau einer Funkverbindung zwischen dem mobilen Endgerät MS und einer Basisstation BS erfolgt zunächst eine Zugangsauthentisierung. Die Funktion der Authentisierung, der Autorisation und der Buchhaltung erfolgt mittels so genannter AAA-Servern (AAA: Authentification Authorization and Accounting). Zwischen dem mobilen Endgerät MS und dem AAA-Server des Heimnetzes (HAAA) werden Authentisierungsnachrichten ausgetauscht mittels der die Adresse des Heimagenten HA und ein Authentisierungsschlüssel gewonnen werden. Der Authentisierungsserver im Heimnetz enthält die Profildaten des Teilnehmers. Der AAA-Server erhält eine Authentisierungsanfragenachricht, die eine Teilnehmeridentität des mobilen Endgerätes enthält. Der AAA-Server generiert nach erfolgreicher Zugangsauthentisierung einen MSK-Schlüssel (MSK: Master Session Key) zum Schutz der Datenübertragungsstrecke zwischen dem mobilen Endgerät MS und der Basisstation BS des Zugangsnetzwerkes ASN. Dieser MSK-Schlüssel wird von dem AAA-Server des Heimnetzes über das Zwischennetz CSN an das Zugangsnetzwerk ASN übertragen.

Nach der Zugangsauthentisierung wird, wie in Figur 4 zu sehen, der DHCP-Proxy-Server im Zugangsnetzwerk ASN konfiguriert. Fall die IP-Adresse und Host-Konfiguration bereits in der AAA-Antwortnachricht enthalten ist, wird die gesamte Information in den DHCP-Proxy-Server heruntergeladen.

Nach erfolgreicher Authentisierung und Autorisierung sendet die Mobilstation bzw. das mobile Endgerät MS eine DHCP Discovery Nachricht und es erfolgt eine IP-Adressenzuweisung.

Wird ein mobiles Endgerät MS in ein Netz eingebunden, muss das mobile Endgerät MS möglicherweise in Erfahrung bringen können, ob es sich in einem Heim- oder einem Fremdnetz befindet. Weiterhin muss das mobile Endgerät MS in Erfahrung bringen, welcher Rechner in dem jeweiligen Netz der Heim. Bzw. der Fremdagent ist. Diese Informationen werden durch das so genannten Agent Discovery ermittelt. Es gibt zwei Arten von Agent Discovery, nämlich so genannte Agent Advertisement und das Agent Soliciation.

Bei dem Agent Advertisement senden die Agenten, d.h. die Heim- oder Fremdagenten, periodisch Broadcast-Nachrichten an alle Rechner bzw. mobilen Endgeräte des Subnetzes. Jeder Rechner, der in einem bestimmten Zeitraum die Broadcast-Nachrichten abhört, kann so die Agenten im jeweiligen Subnetz identifizieren.

Wird ein mobiles Endgerät MS neu aktiviert, ist es im Allgemeinen nicht praktisch, auf das nächste Agent -Advertisement zu warten. Das mobile Endgerät MS muss sofort wissen, in welchem Subnetz es sich gerade befindet. Beim so genannten Agent Solicitation sendet daher das mobile Endgerät MS eine Aufforderung an alle Rechner des jeweiligen Subnetzes, ein Agent Advertisement durchzuführen. Das mobile Endgerät MS kann durch Agent Solicitation erzwingen, dass sich die Agenten sofort zu erkennen geben, sodass sich die Wartezeit erheblich verkürzt. Agent Solicitation wird auch dann durchgeführt, wenn ein Agent Advertisement ausbleibt, beispielsweise bei Packet Loss oder Netzwechsel. Mit Hilfe des Agent Discovery kann ein mobiles Endgerät MS auch feststellten, ob es sich in seinem Heimnetz oder in einem Fremdnetz befindet. Anhand der Paketinformation innerhalb einer Agent Advertisement-Nachricht erkennt das mobile Endgerät MS seinen Heimagenten HA. Bekommt das mobile Endgerät MS Nachrichtenpakete von einem Fremdnetz, so kann es zusätzlich feststellen, ob sich sein Standort seit dem letzten Advertisement verändert hat. Empfängt das mobile Endgerät MS keine Advertisment-Nachricht, geht das mobile Endgerät MS zunächst davon aus, dass es sich in dem Heimnetz befindet und der Heimagent HA gestört ist. Das mobile Endgerät MS versucht dann mit dem Router des Netzwerkes Kontakt aufzunehmen, um diese Annahme zu bestätigen. Befindet sich das mobile Endgerät MS nicht in seinem Heimnetz, versucht es daraufhin, einen DHCP-Server zu erreichen und eine Adresse des Subnetzes zu erhalten. Ist dies erfolgreich, benutzt das mobile Endgerät MS diese Adresse als so genannte Colocated Care-Of-Adresse und nimmt mit dem Heimagenten HA Kontakt auf. Die Colocated Care-Of-Adresse ist einem dem mobilen Endgerät MS im Fremdnetz zugewiesene Adresse, die auch an den Heimagenten HA übermittelt wird.

Man unterscheidet zwischen netzbasiertem Mobilitätsmanagement (PMIP) und endgerätebasiertem Mobilitätsmanagement (CMIP). Beim endgerätebasierten Mobilitätsmanagement CMIP unterstützt das Endgerät Mobile-IP (MIP).

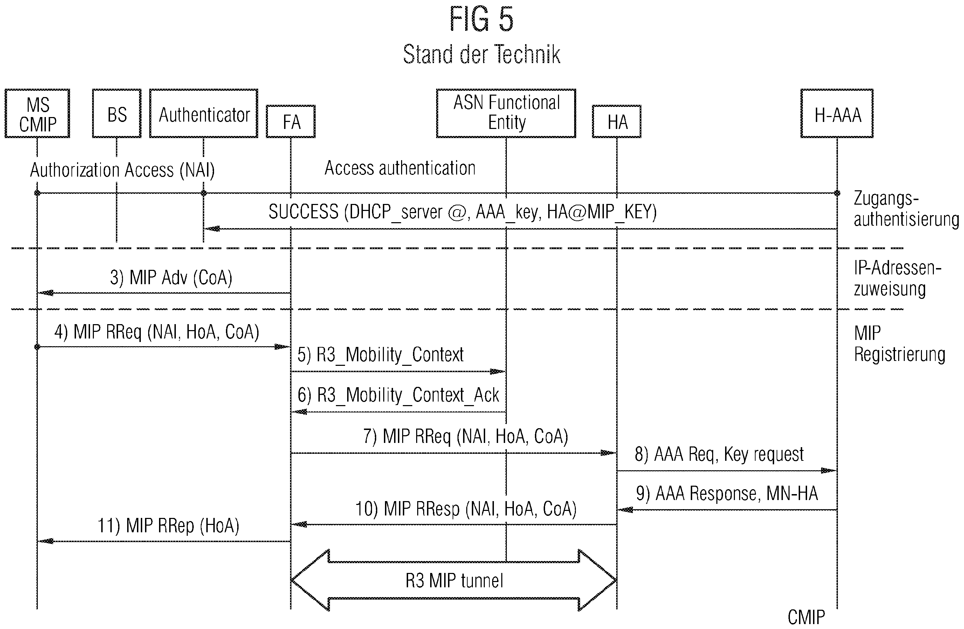

Figur 4 zeigt den Verbindungsaufbau bei einem herkömmlichen netzbasierten Mobilitätsmanagement (PMIP), während die Figur 5 den Verbindungsaufbau bei einem herkömmlichen endgerätebasierten Mobilitätsmanagement (CMIP) darstellt.

Beim Aufbau einer Verbindung zwischen dem mobilen Endgerät MS und dem Netz sendet der Authentisierungsserver des Heimnetzes (H-AAA) nach erfolgreicher Authentisierung des Teilnehmers eine Authentisierungsbetätigungsnachricht (SUCCESS). Die Authentisierungsbestätigungsnachricht meldet dem Authentisierungs-Client, dass die Authentisierung des Teilnehmers erfolgreich abgeschlossen wurde.

Beim Proxy-MIP bzw. netzbasierten Mobilitätsmanagement (PMIP) unterstützt das mobile Endgerät Mobile-IP nicht bzw. die entsprechende MIP-Software ist in dem mobilen Endgerät MS nicht aktiviert.

Demgegenüber wird beim Client-MIP (CMIP) bzw. beim endgerätebasierten Mobilitätsmanagement Mobile-IP von dem jeweiligen Endgerät bzw. der Mobile Station MS unterstützt.

Beim Proxy-MIP erkennt das mobile Endgerät MS nur eine vom DHCP-Server zugewiesene IP-Adresse. Die Care-Of-Adresse des mobilen Endgerätes MS ist nicht dem mobilen Endgerät, sondern dem PMIP-Client, dem Fremdagenten FA sowie dem Heimagenten HA bekannt. Demgegenüber erkennt das mobile Endgerät MS beim Client-MIP seine beiden IP-Adressen, d.h. sowohl die Home Address als auch die Care-Of-Adresse.

Wie in Figuren 4, 5 erkennbar, erfolgt nach der IP-Adressenzuweisung eine MIP-Registrierung. Bei der MIP-Registrierung wird der Heimagent HA über den aktuellen Standort des mobilen Endgerätes MS informiert. Zu seiner Registrierung sendet das mobile Endgerät MS bzw. der entsprechende PMIP-Client eine Registrierungsanforderung an einen Heimagenten HA , die die aktuelle Care-Of-Adresse enthält. Der Heimagent HA trägt die Care-Of-Adresse in eine von ihm verwaltete Liste ein und antwortet mit einer Registrierungsantwort (Registration Reply). Da prinzipiell jeder Rechner an einen Heimagenten HA eine Registrierungsanforderung schicken kann, könnte auf einfache Weise einem Heimagenten HA vorgespielt werden, ein Rechner bzw. ein mobiles Endgerät MS habe sich in ein anderes Netzwerk bewegt. Um dies zu verhindern, verfügt sowohl das mobile Endgerät MS als auch der Heimagent HA über einen gemeinsamen geheimen Schlüssel, nämlich einen so genannten Mobile IP Schlüssel (MIP-KEY).

Bei Proxy-MIP (PMIP) wird die Registrierungsanforderung (MIPRRQ) von einem PMIP-Client innerhalb des Zugangsnetzes ASN über einen Fremdagenten FA an den Heimagenten HA übertragen. Der Heimagent HA lässt sich von dem zugehörigen Authentisierungsserver H-AAA einen Schlüssel für den Teilnehmer zuweisen und überträgt diesen mit der MIP-Registrierungsantwort (MIP Registration Reply), wie in Figur 4 dargestellt ist.

Bei endgerätebasiertem Mobilitätsmanagement (CMIP) wird die Registrierungsanfragenachricht (MIPRRQ) direkt von dem mobilen Endgerät MS über den Fremdagenten FA an den Heimagenten HA gerichtet, wie in Figur 5 dargestellt.

Wie man aus den Figuren 4, 5 erkennen kann, werden so bei PMIP und CMIP bei der Zugangsauthentisierung der gleiche Mobile IP Schlüssel (MIP Key) zur Verschlüsselung von Mobile IP Signalisierungsnachrichten durch den Authentisierungsserver bereitgestellt. Der Mobile IP Schlüssel dient zur Verschlüsselung von Mobile IP Signalisierungsnachrichten zwischen dem Mobile IP Client und dem Mobile IP Heimagenten HA.

Für den in Figur 5 dargestellten CMIP Fall bekommt daher der Authentikator einen Mobile IP Schlüssel, den er gar nicht benötigt. Der Authentikator befindet sich üblicherweise in einem Gateway-Knoten des Zugangsnetzes ASN. Da der Mobile IP Schlüssel Signalisierungsnachrichten zwischen dem mobilen Endgerät MS und dem Heimagenten HA verschlüsseln soll, benötigt der Authentikator diesen Mobile IP Schlüssel nicht. Somit erhält bei dem herkömmlichen System das Zugangsnetz ASN einen Schlüssel, den es gar nicht benötigt, der jedoch zu Manipulationszwecken verwendbar ist. Beispielsweise könnte von dem Gateway-Knoten des Zugangsnetzes ASN mit Hilfe des unnötigerweise übertragenen Mobile IP Schlüssels eine unberechtigte Mobile IP Registrierungsanforderungsnachrichten (MIPRRQ) gesendet werden. Ein weiterer Nachteil besteht darin, dass der unnötigerweise übersandte Mobile IP Schlüssel in dem ASN-Gateway-Knoten unnötig Speicherplatz belegt.

Es ist daher Aufgabe der vorliegenden Erfindung ein Verfahren und ein System zu schaffen, bei dem ein Mobile IP Schlüssel zur Vermeidung von Manipulationen nur an diejenigen Knoten verteilt wird, die ihn tatsächlich benötigen.

Diese Aufgabe wird erfindungsgemäß durch ein Verfahren mit den in Patentanspruch 1 angegebenen Merkmalen und durch ein System mit den in Patentanspruch 20 angegebenen Merkmalen gelöst.

Die Erfindung schafft ein Verfahren zum Bereitstellen eines Mobile IP Schlüssels, der zur Verschlüsselung von Nachrichten zwischen einem Teilnehmer-Endgerät (MS) oder einem PMIP-Client und einem Heimagenten (HA) vorgesehen ist,
wobei ein Authentisierungsserver den Mobile IP Schlüssel (MIP-KEY) nur dann bereitstellt, wenn der Authentisierungsserver anhand eines entsprechend kodierten Parameters P erkennt, dass das Teilnehmer-Endgerät (MS) selbst Mobile IP nicht einsetzt (PMIP).

Bei einer bevorzugten Ausführungsform des erfindungsgemäßen Verfahrens wird der kodierte Parameter P durch eine kodierte Teilnehmeridentität NAI (Network Access Identifier) gebildet.

Bei einer bevorzugten Ausführungsform wird der Authentisierungsserver durch einen AAA-Authentisierungsserver gebildet.

Bei einer weiteren Ausführungsform des erfindungsgemäßen Verfahrens wird die kodierte Teilnehmeridentität in einer Nachricht während einer Authentisierung des Teilnehmerendgerätes MS an den Authentisierungsserver übertragen.

Bei einer alternativen Ausführungsform des erfindungsgemäßen Verfahrens wird die kodierte Teilnehmeridentität NAI in einer Nachricht während einer Registrierung des Teilnehmerendgerätes MS an den Authentisierungsserver übertragen.

Bei einer alternativen Ausführungsform des erfindungsgemäßen Verfahrens wird der kodierte Parameter durch einen kodierten Security Parameter Index (SPI) gebildet.

Bei einer bevorzugten Ausführungsform wird dabei der kodierte Security Parameter Index (SPI) während einer Registrierung des Teilnehmerendgerätes MS an den Authentisierungsserver übertragen.

Bei einer Ausführungsform des erfindungsgemäßen Verfahrens erfolgt die Kodierung des Parameters P durch das mobile Endgerät MS.

Bei einer alternativen Ausführungsform des erfindungsgemäßen Verfahrens erfolgt die Kodierung des Parameters P durch einen Authentikator.

Bei einer weiteren alternativen Ausführungsform des erfindungsgemäßen Verfahrens erfolgt die Kodierung des Parameters P durch einen PMIP-Client.

Bei einer weiteren alternativen Ausführungsform des erfindungsgemäßen Verfahrens erfolgt die Kodierung des Parameters P durch einen Fremdagenten FA.

Bei einer bevorzugten Ausführungsform des erfindungsgemäßen Verfahrens wird zusätzlich in dem Parameter P einkodiert, um welche MIP-Version es sich handelt.

Bei einer weiteren Ausführungsform des erfindungsgemäßen Verfahrens fordert der Heimagent HA unter Angabe des kodierten Parameters den Mobile IP Schlüssel (MIP-KEY) bei dem Authentisierungsserver an.

Bei einer weiteren Ausführungsform des erfindungsgemäßen Verfahrens stellt der Authentisierungsserver zwei unterschiedliche MIP-Schlüssel bereit,
wobei dem Heimagenten HA durch den Authentisierungsserver ein erster CMIP-Schlüssel bereitgestellt wird, wenn das mobile Endgerät MS selbst Mobile IP einsetzt, und
wobei dem Heimagenten HA durch den Authentisierungsserver ein zweiter PMIP-Schlüssel bereitgestellt wird, wenn das mobile Endgerät MS selbst Mobile IP nicht einsetzt.

Bei einer bevorzugten Ausführungsform des erfindungsgemäßen Verfahrens berechnet der Authentisierungsserver in Abhängigkeit von einem Mobile IP Root-Schlüssel (RK) und in Abhängigkeit von einer Zeichenkette eine Hash-Wert H, der als Mobile IP Schlüssel (MIP-KEY) bereitgestellt wird.

Dabei wird die Zeichenkette vorzugsweise aus verketteten Unterzeichenketten gebildet.

Bei einer bevorzugten Ausführungsform wird eine Unterzeichenkette durch eine IP-Adresse des Heimagenten HA gebildet.

Bei einer Ausführungsform des erfindungsgemäßen Verfahrens weist die Teilnehmeridentität NAI folgendes Datenformat auf:
[Routing Realm1! Routing Realm2!...!] {Auth Mode} pseudo Identitiy @realm,
wobei die Pseudo Identity eine durch das Endgerät MS bei der Authentisierung erzeugte Zufallszahl ist und
wobei Auth Mode ein Zeichen ist, welches eine Authentisierungsmodus angibt.

Bei einer Ausführungsform des erfindungsgemäßen Verfahrens wird bei der kodierten Teilnehmeridentität NAI der Authentisierungsmodus (Auth Mode) um mindestens ein Zeichen erweitert, welches angibt, ob das Teilnehmer-Endgerät MS selbst Mobile IP einsetzt.

Die Erfindung schafft ferner ein System zum Bereitstellen eines Mobile IP Schlüssels, der zur Verschlüsselung von Nachrichten zwischen einem Teilnehmerendgerät MS oder einem PMIP Client und einem Heimagenten HA vorgesehen ist,
wobei ein Authentisierungsserver den Mobile IP Schlüssel (MIP-KEY) nur dann bereitstellt, wenn der Authentisierungsserver anhand eines entsprechend kodierten Parameters P erkennt, dass das Teilnehmer-Endgerät MS selbst Mobile IP nicht einsetzt (PMIP).

Die Erfindung schafft ferner ein mobiles Endgerät MS, das in Netzwerkanmeldenachrichten, die an einen Authentisierungsserver gerichtet sind, und/oder in MIP-Registrierungsanfragennachrichten, die an einen Heimagenten HA gerichtet sind, einen kodierten Parameter P überträgt, welcher angibt, ob das mobile Endgerät MS selbst Mobile IP einsetzt.

Die Erfindung schafft ferner einen Client Rechner eines Zugangsnetzes ASN, der in MIP-Registrierungsanfragenachrichten, die an einen Heimagenten HA gerichtet sind, einen kodierten Parameter P überträgt, welche angibt, ob das zugehörige mobile Endgerät MS als Mobile IP einsetzt.

Im weiteren werden bevorzugte Ausführungsformen des erfindungsgemäßen Verfahrens und des erfindungsgemäßen Systems zum Bereitstellen eines Mobile IP Schlüssels unter Bezugnahme der beigefügten Figuren zur Erläuterung erfindungswesentlicher Merkmale beschrieben.

Es zeigen:

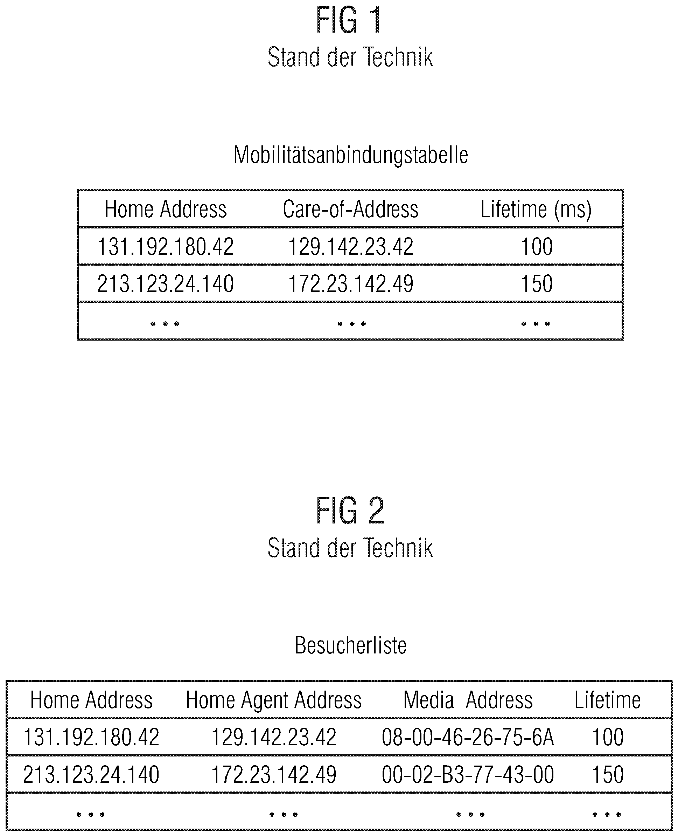

- Figur 1: eine Mobilitätsanbindungstabelle nach dem Stand der Technik;
- Figur 2: eine Besucherliste nach dem Stand der Technik;
- Figur 3: ein Referenzmodel für ein WiMax-Funknetzwerk;
- Figur 4: einen Verbindungsaufbau bei Proxy-MIP (PMIP) nach dem Stand der Technik;
- Figur 5: einen Verbindungsaufbau bei Client-MIP (CMIP) nach dem Stand der Technik;

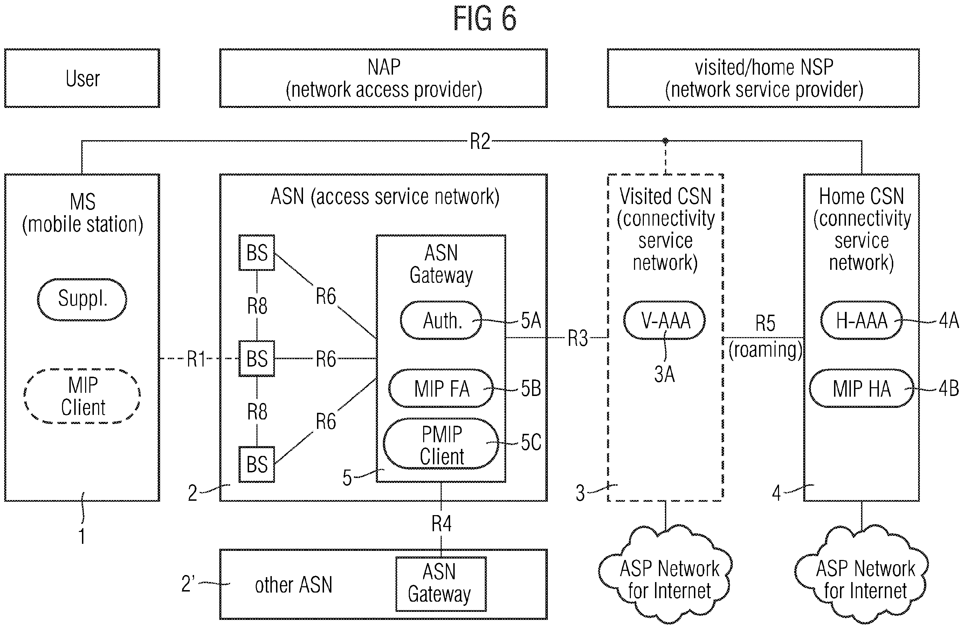

- Figur 6: ein WiMax-Netz bei dem das erfindungsgemäße Verfahren zum Bereitstellen eines Mobile IP Schlüssels einsetzbar ist;

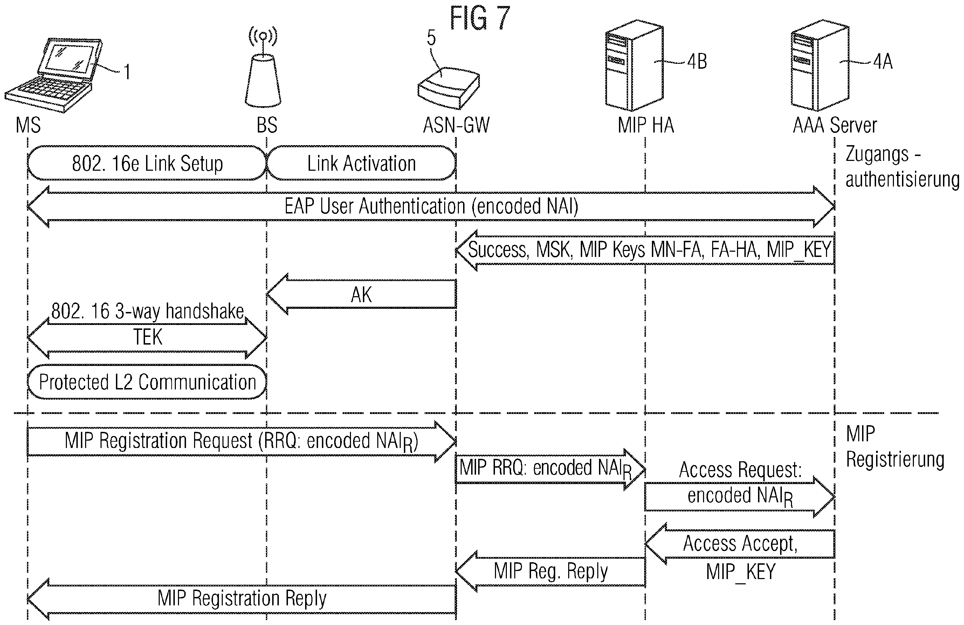

- Figur 7: eine WiMax-Netzanmeldung bei dem das erfindungsgemäße Verfahren zum Bereitstellen eines Mobile IP Schlüssels durchgeführt wird;

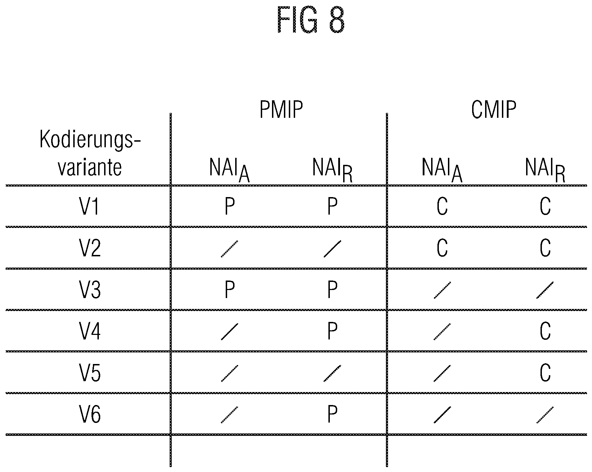

- Figur 8: eine Tabelle zur Erläuterung von Kodierungsmöglichkeiten einer bei der Netzanmeldung übertragenen Teilnehmeridentität zur Erläuterung einer Ausführungsform des erfindungsgemäßen Verfahrens;

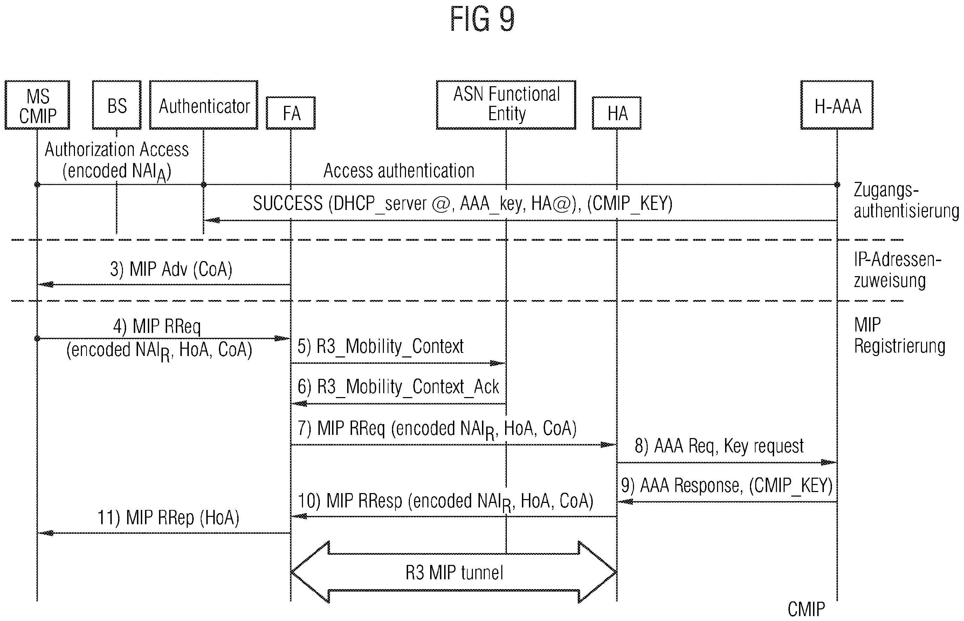

- Figur 9: ein Signaldiagramm für einen CMIP-Fall zur Erläuterung des erfindungsgemäßen Verfahrens zum Bereitstellen eines Mobile IP Schlüssels;

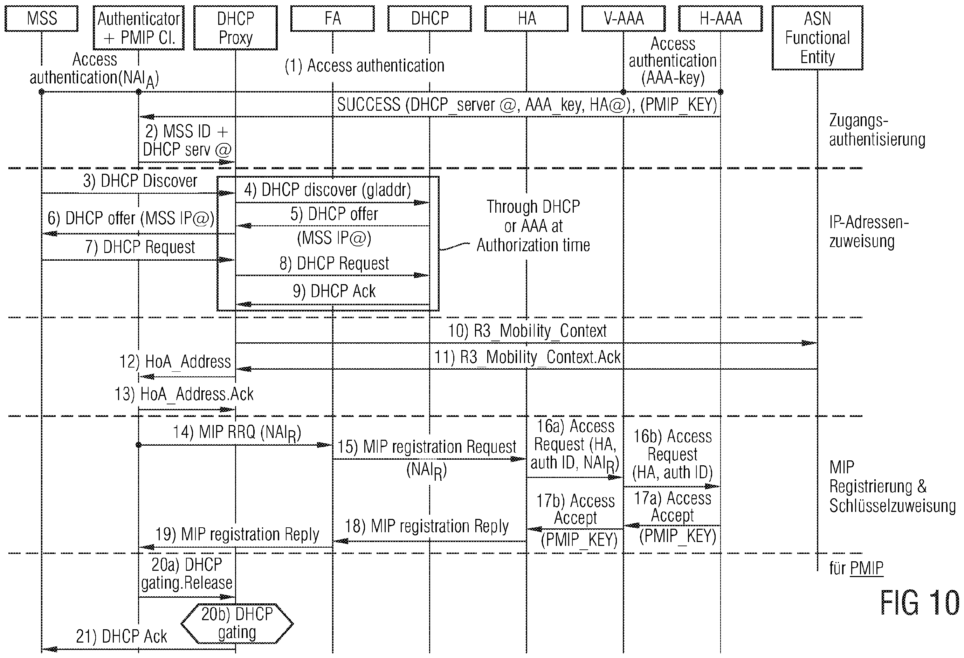

- Figur 10: ein weiteres Signaldiagramm für einen PMIP-Fall zur Erläuterung des erfindungsgemäßen Verfahrens zum Bereitstellen eines Mobile IP Schlüssels;

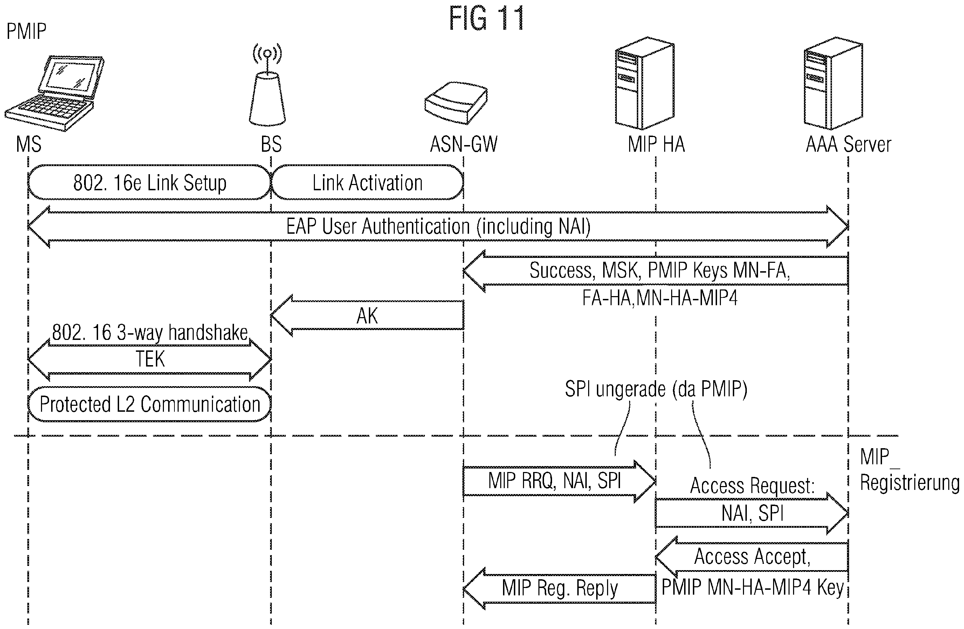

- Figur 11: ein weiteres Signaldiagramm für einen PMIP-Fall zur Erläuterung einer alternativen Ausführungsform des erfindungsgemäßen Verfahrens zum Bereitstellen eines Mobile IP Schlüssels;

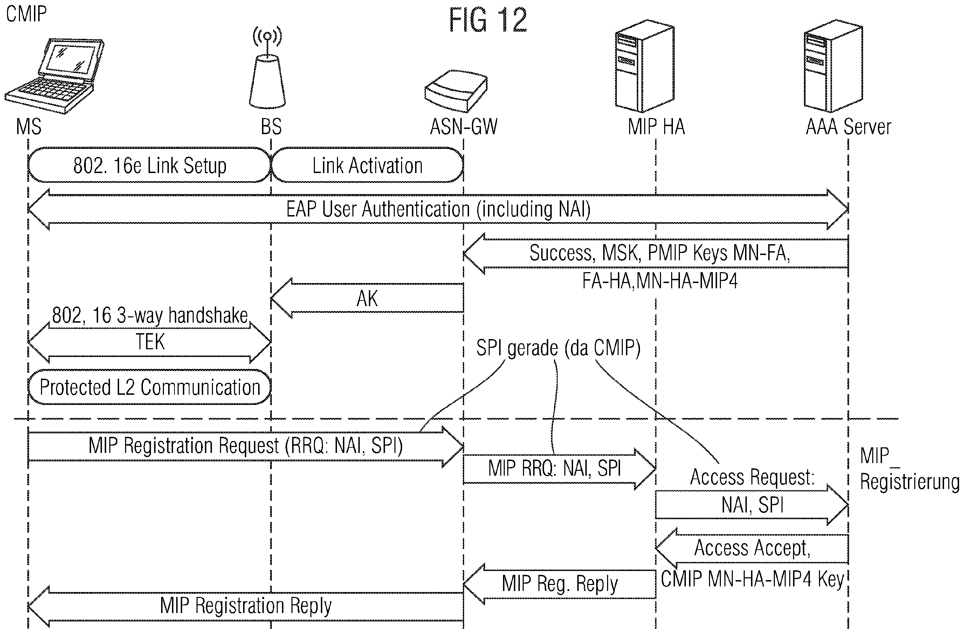

- Figur 12: ein weiteres Signaldiagramm für einen CMIP-Fall zur Erläuterung einer alternativen Ausführungsform des erfindungsgemäßen Verfahrens zum Bereitstellen eines Mobile IP Schlüssels.

Figur 6 zeigt eine WiMax-Netzarchitektur bei der das erfindungsgemäße Verfahren zum Bereitstellen eines Mobile IP Schlüssels einsetzbar ist. Ein mobiles Endgerät 1 (MS = Mobile Station) ist über eine Schnittstelle R1 an ein Zugangsnetzwerk 2 (ASN = Access Service Network) angebunden. Das Zugangsnetzwerk 2 ist über eine Schnittstelle R3 an ein besuchtes Netz 3 (VCSN = Visited Connectivity Service Network) angeschlossen. Dieses besuchte Netzwerk 3 ist seinerseits über eine Schnittstelle R5 mit einem Heimnetz 4 (HCSN = Home Connectivity Service Network) verbunden.

Bewegt sich das mobile Endgerät 1 von einem ersten Zugangsnetz 2 zu einem zweiten Zugangsnetz 2' erfolgt eine Übergabe (Handover) zwischen dem ersten und zweiten Zugangsnetz. Diese Übergabe (Handover) wird in der WiMax-Spezifikation als "Macro Mobility Management" oder auch als "R3 Mobility" bzw. "Inter ASN Mobility" bezeichnet. Das besuchte Netz 3 und das Heimnetz 4 sind jeweils an ein Netzwerk eines Access Service Providers (ASP) oder an das Internet angeschlossen.

Jedes Zugangsnetz 2 enthält mehrere Basisstationen BS, die ihrerseits über eine Schnittstelle R6 an einen ASN-Gateway-Knoten 5 angebunden sind. Der in Figur 6 dargestellte ASN-Gateway-Knoten 5 umfasst einen Authentikator 5A, einen MIP-Fremdagenten 5B und einen PMIP-Client 5C. In jedem besuchten Netz 3 befindet sich ein AAA-Server 3A, wie in Figur 6 dargestellt. In dem Heimnetz 4 befindet sich ebenfalls ein Authentisierungsserver 4A sowie ein Heimagent 4B.

Auf Seiten des mobilen Endgerätes 1 gilt es zwei Fälle zu unterscheiden. Das mobile Endgerät 1 unterstützt selbst Mobile IP und weist einen eigenen CMIP-Client auf oder das mobile Endgerät 1 unterstützt nicht Mobile IP und benötigt einen PMIP-Client 5C im Gateway-Knoten 5 des Zugangsnetzes 2.

Figur 7 zeigt ein Signaldiagramm zur Erläuterung des erfindungsgemäßen Verfahrens.

Bei dem erfindungsgemäßen Verfahren zum Bereitstellen eines Mobile IP Schlüssels, der zur Verschlüsselung, d.h. zum kryptographischen Schutz z.B. vor Manipulation und/oder Abhören, von Nachrichten zwischen einem Teilnehmerendgerät 1 oder einem PMIP-Client 5C und einem Heimagenten 4B vorgesehen ist, stellt der Authentisierungsserver 4A den Mobile IP Schlüssel nur dann bereit, wenn der Authentisierungsserver 4A im Heimnetz 4 anhand eines entsprechend kodierten Parameters P erkennt, dass das Teilnehmerendgerät 1 selbst Mobile IP nicht einsetzt bzw. ein PMIP-Fall vorliegt. Mit Hilfe des Mobile IP Schlüssels kann insbesondere eine Manipulation (Veränderung) von Nachrichten durch kryptographische Sicherheitsverfahren (kryptographische Prüfsumme, Message Authentication Code) verhindert werden. Es können auch Nachrichten zum Schütz vor Abhören verschlüsselt werden.

Bei diesem Parameter P handelt es sich vorzugsweise um eine kodierte Teilnehmeridentität bzw. einen Network Access Identifier (NAI).

Allerdings können auch andere während der Netzanmeldung übertragene Parameter P bei dem erfindungsgemäßen Verfahren kodiert werden. Beispielsweise kann auch ein bei der Registrierung verwendeter Security Parameter Index (SPI) kodiert werden.

Wie man aus Figur 7 erkennen kann, überträgt das mobile Endgerät 1 bei seiner Authentisierung an den Authentisierungsserver 4A eine kodierte Teilnehmeridentität NAI. Anhand der kodierten Teilnehmeridentität NAI erkennt der Authentisierungsserver 4A, ob das mobile Endgerät 1 selbst Mobile IP unterstützt (CMIP) oder ob das mobile Endgerät 1 Mobile IP nicht einsetzt (PMIP). Nur wenn der Authentisierungsserver 4A anhand des kodierten Parameters P feststellt, dass das mobile Teilnehmerendgerät 1 selbst Mobile IP nicht einsetzt, d.h. wenn der PMIP-Fall vorliegt, wird der Mobile IP Schlüssel (MIP Key) zur Verschlüsselung von Nachrichten zwischen einem Teilnehmerendgerät 1 und einem Heimagenten 4B des mobilen Endgerätes 1 bereitgestellt. In einer ersten möglichen Ausführungsform überträgt der Authentisierungsserver 4A den Mobile IP Schlüssel dann, wenn festgestellt wird, dass das Teilnehmerendgerät 1 selbst Mobile IP nicht einsetzt(PMIP-Fall). Für diesen PMIP-Fall übersendet der Authentisierungsserver 4A den Mobile IP Schlüssel (MIP Key) in einer SUCCESS-Nachricht an einen in dem ASN-Gateway 5 enthaltenen Authentikator 5A, der ihn wiederum einem PMIP-Client bereitstellt. Bei einer ersten Variante wird für den umgekehrten Fall (CMIP-Fall), d.h., wenn das mobile Endgerät 1 Mobile IP unterstützt, durch den Authentisierungsserver 4A kein Mobile IP Schlüssel an den Authentikator 5A übertragen. Bei einer alternativen Variante stellt der Authentisierungsserver 4A zwei unterschiedliche IP-Schlüssel bereit, nämlich einen ersten CMIP-Schlüssel für den Fall, dass das mobile Endgerät 1 selbst Mobile IP einsetzt, und einen zweiten PMIP-Schlüssel für den Fall, dass das mobile Endgerät 1 selbst Mobile IP nicht einsetzt. Der entsprechende Schlüssel wird durch den Authentisierungsserver 4A an den Authentikator 5A und Heimagenten 4B übertragen.

Die Kodierung des Parameters P und insbesondere der Teilnehmeridentität NAI erfolgt bei einer Ausführungsform durch das mobile Endgerät 1. Bei alternativen Ausführungsformen erfolgt die Kodierung des Parameters P durch den Authentikator 5A, einem PMIP-Client 5C oder durch einen Fremdagenten 5B.

Bei einer bevorzugten Ausführungsform wird zusätzlich in den Parameter einkodiert, um welche MIP-Version, d.h. MIPV4 oder MIPV6 es sich handelt.

Der Heimagent 4B fordert unter Angabe des kodierten Parameters P, insbesondere unter Angabe der kodierten Teilnehmeridentität NAI den Mobile IP Schlüssel, der zur Verschlüsselung von Nachrichten zwischen dem Heimagenten 4B und dem Teilnehmergerät 1 bzw. einem PMIP-Client 5C des Teilnehmerendgerätes 1 notwendig ist, bei der MIP-Registrierung bei dem Authentisierungsserver 4A an.

Die Kodierung der Teilnehmeridentität NAI kann in unterschiedlicher Weise erfolgen. Es ist nicht zwingend notwendig, dass während der Authentisierung und während der Registrierung dieselbe Teilnehmeridentität NAI verwendet wird. Die während der Authentisierung verwendete Teilnehmeridentität NAI_{A} und die während der Registrierung verwendetet Teilnehmeridentität NAI_{R} können daher, wie in Figur 7 angedeutet, unterschiedlich sein.

Die Teilnehmeridentität NAI weist vorzugsweise folgendes Datenformat auf:
[Routing Realm1! Routing Realm2!...!] {Auth Mode} pseudo Identitiy @realm,
wobei die Pseudo Identity eine durch das Endgerät 1 bei der Authentisierung erzeugte Zufallszahl darstellt und wobei Auth Mode ein Zeichen ist, welches einen Authentisierungsmodus angibt. Der Authentisierungsmodus zeigt dem Authentisierungsserver an, welcher Authentisierungsbetriebsmodus durch das mobile Endgerät 1 angefordert wird.

Bei einer möglichen Ausführungsform des erfindungsgemäßen Verfahrens wird der in der Teilnehmeridentität NAI enthaltene Authentisierungsmodus, bei dem es sich möglicherweise um ein Zeichen bzw. ein Digit handelt, um mindestens ein zusätzliches Zeichen erweitert, welches angibt, ob das Teilnehmerendgerät 1 selbst Mobile IP einsetzt oder nicht.

Beispielsweise wird die Teilnehmeridentität NAI
{1} 31276453@vodafone.com
für den CMIP-Fall wie folgt codiert:
{1C}31276453@vodafone.com
und für den PMIP-Fall wie folgt kodiert:
{1P}31276453@vodafone.com.

Alternativ wird die Teilnehmeridentität NAI beispielsweise nur dann um ein Zeichen erweitert, wenn ein CMIP-Fall vorliegt, so dass sich folgende kodierte Teilnehmeridentität für den CMIP-Fall ergibt: {1C}31276453@vodafone.com,
wobei für den PMIP-Fall keine Erweitung der Authentisierungmodus-Zeichenkette durchgeführt wird, so dass für den PMIP-Fall sich folgende Kodierung ergibt:
{1}31276453@vodafone.com.

Es ergeben sich verschiedene Varianten zur Kodierung der Teilnehmeridentität NAI, wobei die während der Authentisierung und der Registrierung verwendeten Teilnehmeridentitäten NAI_{A}, NAI_{R} gleich oder unterschiedlich kodiert werden können.

Mögliche Varianten zur Kodierung sind in Figur 8 tabellenförmig dargestellt.

Beispielsweise ist in Variante V1 die Zeichenkette im Authentisierungsmodus für den PMIP-Fall sowohl bei der Teilnehmeridentität NAI_{A} währen der Authentisierung als auch bei der Teilnehmeridentität NAI_{R} während der Registrierung um das Zeichen "P" erweitert, während sie für den CMIP-Fall um das Zeichen "C" erweitert werden.

In der Variante V2 erfolgt für den PMIP-Fall keine Erweiterung der Authentisierungsmodus-Zeichenkette, während für den CMIP-Fall der Authentisierungsmodus um das Zeichen "C" erweitert wird. Weitere Varianten V3 bis V6 sind in der Tabelle gemäß Figur 8 angegeben.

Zusätzlich wird optional in die Teilnehmeridentität NAI einkodiert, um welche MIP-Version, beispielsweise MIPV4 oder MIPV6 es sich handelt, indem zusätzlich zu dem Zeichen "P" oder "C" ein Zeichen "4" bzw. "6" angehängt wird.

Selbstverständlich können beliebige ASCII Zeichen zur Einkodierung der jeweiligen Fälle verwendet werden.

Der Authentisierungsserver 4A liefert, abhängig von dem MIP-Mode, wie er in der Teilnehmeridentität NAI einkodiert ist, entweder einen PMIP-Schlüssel oder einen CMIP-Schlüssel an den Heimagenten 4B.

Bei dem erfindungsgemäßen Verfahren erkennen der Heimagent 4B oder der Authentisierungsserver 4A anhand der kodierten Teilnehmeridentität NAI, die ein mobiles Endgerät 1 bei der Netzanmeldung verwendet, ob CMIP oder PMIP verwendet wird.

Die Schlüsselableitung und Schlüsselübertragung erfolgt in Abhängigkeit davon, ob ein CMIP- oder ein PMIP-Fall vorliegt.

Bei einer ersten Variante wird ein MIP-Key an das Zugangsnetz 5 nur dann übertragen, wenn tatsächlich ein PMIP-Fall vorliegt. Hierbei muss die Schlüsselhierarchie nicht verändert werden und es wird nur ein Schlüssel zur Verschlüsselung von Nachrichten zwischen dem mobilen Endgerät 1 und dem Heimagenten 4B erzeugt.

Bei einer alternativen Ausführungsform werden für den PMIP- und den CMIP-Fall unterschiedliche MIP-Schlüssel abgeleitet.

Beispielsweise berechnet der Authentisierungsserver unter Verwendung einer Hash-Funktion H in Abhängigkeit von einem Mobile IP Root Schlüssel (MIP-RK) und einer Zeichenkette einen Hash-Wert, der als Mobile IP Schlüssel bereitgestellt wird:
MM-HA-PMIP4 = H(MIP-RK, "PMIP4MNHA" | HA-IP)
MN-HA-CMIP4 = H(MIP-RK, "CMIP4MNHA" | HA-IP)

Die bei der Berechnung des Hash-Wertes unter Verwendung der Hash-Funktion H eingesetzte Zeichenkette kann beispielsweise aus verketteten Unterzeichenketten zusammengesetzt sein. Dabei wird vorzugsweise eine Unterzeichenkette HA-IP durch die IP-Adresse des Heimagenten 4B gebildet. Diese Unterzeichenkette wird an eine Zeichenkette angehängt bzw. konkateniert, die für den PMIP-Fall und für den CMIP-Fall unterschiedlich ist, und beispielsweise für den PMIP-Fall "PMIP4MNHA" und für den CMIP-Fall "CMIP4MNHA" lautet. Aus der zusammengesetzten Zeichenkette und einem Mobile IP Root Schlüssel (MIP-RK) wird dann der Hash-Wert unter Verwendung der Hash-Funktion H berechnet. Da die zusammengesetzte Zeichenkette einen Teil aufweist, der für den PMIP- bzw. CMIP-Fall unterschiedlich ist, sind die beiden berechneten Hash-Werte H_{P} (MM-HA-PMIP4), H_{C} (MN-HA-CMIP4) für den PMIP- und den CMIP-Fall unterschiedlich und können als Mobile IP Schlüssel für den jeweiligen Fall bereitgestellt werden.

An das Zugangsnetz 5 wird nur der PMIP-Schlüssel (MN-HA-PMIP4) gesendet, aber nicht der CMIP-Schlüssel (MN-HA-CMIP4).

Wenn der Heimagent 4B später bei der MIP-Registrierung den MIP-Schlüssel von dem Authentisierungsserver 4A abfragt, gibt der Authentisierungsserver 4A abhängig von dem in der Teilnehmeridentität NAI einkodierten MIP-Mode (CMIP oder PMIP) entweder den PMIP-Schlüssel (MS-HA-PMIP4) oder den CMIP-Schlüssel (MS-HA-CMIP4) an den Heimagenten 4B ab. Obwohl hier das Zugangsnetz ASN (Proxy-MN) einen MIP-Schlüssel erhält, kann dieser nicht verwendet werden, wenn der Client MIP unterstützt (CMIP-Fall). Der Heimagent akzeptiert 4B nämlich nur Signalisierungsnachrichten von einem MIP-Client, die mit dem CMIP-Schlüssel (MN-HA-CMIP4) geschützt sind.

Alternativ kann die Ableitung der für PMIP und CMIP unterschiedlichen Schlüssel im Heimagenten 4B direkt erfolgen. Dies kann derart realisiert werden, dass der Authentisierungsserver 4A dem Heimagenten 4B der von dem MIP-Root Key (MIP-RK) abgeleiteten Schlüssel sendet. Der Heimagent kann dann auf Basis der Information, ob der Teilnehmer PMIP oder CMIP verwendet selbst die Ableitung des entsprechenden MIP-Schlüssels (MN-HA) vornehmen.

In einer Ausführungsform werden jeweils unterschiedliche Schlüssel für Mobile IP Version 4 und Mobile IP Version 6 und für den PMIP-Fall und den CMIP-Fall bereitgestellt. Beispielsweise berechnet der Authentisierungsserver unter Verwendung einer Hash-Funktion H in Abhängigkeit von einem Mobile IP Root Schlüssel (MIP-RK) und einer Zeichenkette einen Hash-Wert, der als Mobile IP Schlüssel bereitgestellt wird:
MM-HA-PMIP4 = H(MIP-RK, "PMIP4MNHA" | HA-IP)
MN-HA-CMIP4 = H(MIP-RK, "CMIP4MNHA" | HA-IP)
MM-HA-PMIP6 = H(MIP-RK, "PMIP6MNHA" | HA-IP)
MN-HA-CMIP6 = H(MIP-RK, "CMIP6MNHA" | HA-IP)

Die bei der Berechnung des Hash-Wertes unter Verwendung der Hash-Funktion H eingesetzte Zeichenkette kann beispielsweise aus verketteten Unterzeichenketten zusammengesetzt sein. Dabei wird vorzugsweise eine Unterzeichenkette HA-IP durch die IP-Adresse des Heimagenten 4B gebildet. Diese Unterzeichenkette wird an eine Zeichenkette angehängt bzw. konkateniert, die für die Fälle PMIPv4, CMIPv4, PMIPv6 und CMIPv6 unterschiedlich ist, und beispielsweise für den PMIPv4-Fall "PMIP4MNHA", für den CMIPv4-Fall "CMIP4MNHA", für den PMIPv6-Fall "PMIP6MNHA" und für den CMIPv6-Fall "CMIP6MNHA" lautet. Aus der zusammengesetzten Zeichenkette und einem Mobile IP Root Schlüssel (MIP-RK) wird dann der Hash-Wert unter Verwendung der Hash-Funktion H berechnet. Da die zusammengesetzte Zeichenkette einen Teil aufweist, der für die Fälle PMIPv4, CMIPv4, PMIPv6 und CMIPv6 unterschiedlich ist, sind die vier berechneten Hash-Werte H_{P4} (MM-HA-PMIP4), H_{C4} (MN-HA-CMIP4), H_{P6} (MM-HA-PMIP6), H_{C6} (MN-HA-CMIP6) für die Fälle PMIPv4, CMIPv4, PMIPv6 und CMIPv6 unterschiedlich und können als Mobile IP Schlüssel für den jeweiligen Fall bereitgestellt werden.

In einer Variante werden an das Zugangsnetz 5 nur die beiden PMIP-Schlüssel (MN-HA-PMIP4, MN-HA-PMIP6) gesendet, aber kein CMIP-Schlüssel (MN-HA-CMIP4, MN-HA-CMIP6).

Falls in einer weiteren Variante durch einen übertragenen Parameter P auch zwischen Mobile IP Version 4 und Mobile IP Version 6 unterschieden wird, so stellt der Authentisierungsserver nur entweder den Mobile IP Schlüssel für Version 4 (MM-HA-PMIP4 bzw. MN-HA-CMIP4) bereit, falls der Parameter P angibt, dass Mobile IP Version 4 verwendet wird, oder er stellt nur den Mobile IP Schlüssel für Version 6 (MM-HA-PMIP6 bzw. MN-HA-CMIP6) bereit, falls der Parameter P angibt, dass Mobile IP Version 6 verwendet wird.

In einer Variante gibt der bei der Authentisierung übertragene Parameter P an, ob Mobile IP Version 4 oder Mobile IP Version 6 verwendet wird. Der Authentisierungsserver überträgt an das Zugangsnetz 5 nur den entsprechenden PMIP-Schlüssel (MN-HA-PMIP4 oder MN-HA-PMIP6), d.h. es wird an das Zugangsnetz 5 MN-HA-PMIP4 gesendet, falls durch den Parameter P die Verwendung von Mobile IP Version 4 kodiert ist, und es wird an das Zugangsnetz 5 MN-HA-PMIP6 geendet, falls durch den Parameter P die Verwendung von Mobile IP Version 6 kodiert ist.

Figur 9 dient zur Verdeutlichung des erfindungsgemäßen Verfahrens. Bei dem in Figur 9 dargestellten Signaldiagramm wird ein CMIP-Fall betrachtet, bei dem das mobile Endgerät 1 selbst Mobile IP unterstützt. Bei dem CMIP-Fall überträgt der Authentisierungsserver 4A entweder keinen Mobile IP Schlüssel an den Authentikator 5A innerhalb des Zugangsnetzwerkes 5 (d.h. es ist in der SUCCESS-Nachricht kein Mobile IP Schlüssel MIP-KEY enthalten), oder es wird ein zu dem PMIP-Fall unterschiedlicher PMIP-Schlüssel an den Authentikator 5A übertragen, wie in Figur 9 dargestellt ist.

Figur 10 zeigt ein Signaldiagramm für den PMIP-Fall, bei dem erfindungsgemäßen Verfahren. Für den PMIP-Fall, bei dem das mobile Endgerät 1 selbst Mobile IP nicht unterstützt, wird durch den Authentisierungsserver 4A dem PMIP-Client 5C und dem Authentikator 5A innerhalb des Gateway-Knotens 5 des Zugangsnetzwerkes 5 ein Mobile IP Schlüssel bereitgestellt, welcher in einer SUCCESS-Nachricht übertragen wird. Bei diesem Mobile IP Schlüssel handelt es sich entweder um einen speziell für diesen Fall errechneten PMIP-Schlüssel (PMIP-Key) oder um den herkömmlich abgeleiteten Mobile IP Schlüssel, der dann dem PMIP-Client nur für den PMIP-Fall bereitgestellt wird, d.h. im CMIP-Fall würde er nicht dem Authentikator und damit dem PMIP-Client bereitgestellt werden.

Bei dem erfindungsgemäßen Verfahren erkennt der Authentisierungsserver 4A anhand eines Parameters, ob das Teilnehmerendgerät 1 selbst Mobile IP unterstützt (CMIP-Fall) oder selbst Mobile IP nicht unterstützt (PMIP-Fall). Dieser Parameter P wird vorzugsweise aus einem zur Zugangsauthentisierung mittels des EAP-Protokolls übertragenen Parameter P abgeleitet.

Die Kodierung des Parameters P muss nicht zwingend während der Netzwerkanmeldung erfolgen. Die Kodierung kann auch anhand eines Parameters P erfolgen, der in einer Nachricht während einer Registrierung des Teilnehmerendgerätes 1 an den Authentisierungsserver 4A übertragen wird. Insbesondere, wenn die Kodierung nur bei MIP-Signalisierungsnachrichten, aber nicht bei der Netzwerkanmeldung erfolgt, wird bei einer Ausführungsform des erfindungsgemäßen Verfahrens der in einer Mobile IP Signalisierungsnachricht enthaltene Security Parameter Index SPI dafür verwendet.

Figur 11 zeigt ein Signaldiagramm zur Darstellung dieser Ausführungsform. Der Gateway-Knoten 5 sendet eine Registrierungsanforderung, welche einen entsprechend kodierten Security Parameter Index SPI enthält anhand welcher der Authentisierungsserver 4A feststellen kann, ob das mobile Endgerät 1 Mobile IP einsetzt (CMIP-Fall) oder nicht einsetzt (PMIP-Fall). Bei dem Security Parameter Index SPI handelt es sich um einen 32 Bit Zahlenwert. Der Security Parameter Index SPI ist in RFC3344 für MIPV4 "IP Novelty Support for IP V4" bzw. in RFC4285 "Authentification Protocol for Mobile IP V6" der MIPV6 definiert.

Beispielsweise kann bei einer Ausführungsform ein fest vorgegebener SPI-Wert den PMIP-Fall kodieren, und ein zweiter vorgegebener SPI-Wert den CMIP-Fall.

Alternativ kann ein bestimmtes Bit des Security Parameter Index SPI für diesen Zweck definiert werden, beispielsweise das höchstwertigste Bit oder das niederwertigste Bit 0. Beispielsweise kodiert ein SPI-Wert, bei dem dieses Bit einen Wert 0 hat den CMIP-Fall während, wenn dieses Bit den Wert 1 hat, der PMIP-Fall angezeigt wird.

Bei dem in Figur 11 dargestellten Diagramm ist beispielsweise der SPI-Wert ungerade, d.h. das letzte Bit ist auf 1 gesetzt, so dass der PMIP-Fall angezeigt wird.

Falls zusätzlich auch zwischen Mobile IP Version 4 und Mobile IP Version 6 unterschieden werden soll, kann dies entsprechend durch SPI-Werte kodiert werden: Beispielsweise können bei einer Ausführungsform vier Werte vorgegeben sein für die Fälle CMIPv4, PMIPv4, CMIPv6 und PMIPv6.

Alternativ können zwei bestimmte Bit des Security Parameter Index SPI für diesen Zweck definiert werden, beispielsweise die beiden höchstwertigsten Bit oder die beiden niederwertigsten Bit. Beispielsweise kodiert ein SPI-Wert, bei dem diese Bit einen Wert 00 haben den CMIPv4-Fall, ein Wert von 01 den PMIPv4 -Fall, ein Wert von 10 den CMIPv6-Fall, und ein Wert von 11 dem PMIPv6-Fall.

Bei dem in Figur 12 dargestellten Beispiel enthält die von dem mobilen Endgerät 1 übertragene Registrierungsanforderung einen geraden SPI-Wert, welcher anzeigt, dass das Endgerät 1 Mobile IP einsetzt. Dieser SPI-Wert wird weiter an den Authentisierungsserver 4A übertragen, der anhand des SPI-Wertes erkennt, dass der PMIP-Fall vorliegt und einen entsprechenden CMIP-Schlüssel an den Heimagenten 4B überträgt.

Bei dem erfindungsgemäßen Verfahren kann prinzipiell jeder während der Zugangsauthentisierung oder der MIP-Registrierung an den Authentisierungsserver 4A übertragene Parameter P zur Einkodierung des CMIP- oder PMIP-Falles eingesetzt werden.

Das erfindungsgemäße Verfahren eignet sich insbesondere für WiMax-Netze. WiMax verwendet bereits bestimmte Parameter, um einen bestimmten Authentisierungsmodus zu signalisieren. Insbesondere wird bei WiMax bereits eine Teilnehmeridentität NAI eingesetzt, die erfindungsgemäß in einer Ausführungsform kodiert wird, um den PMIP- bzw. CMIP-Fall anzuzeigen. Dies ermöglicht eine sehr einfache Realisierung, da die Teilnehmeridentität NAI ohnehin ausgewertet wird. Hierdurch wird der Signalisierungs-Overhead für die Verteilung von Mobile IP Schlüssel und der Speicherbedarf für das Speichern von Mobile IP-Schlüsseln verringert, da nur die tatsächlich benötigten Schlüssel verteilt werden.

## Patentansprüche

1. Verfahren zum Bereitstellen eines Mobile IP Schlüssels, der zur Verschlüsselung von Nachrichten zwischen einem Teilnehmer-Endgerät (1) oder einem PMIP-Client (5C) und einem Heimagenten (4B) vorgesehen ist,
wobei ein Authentisierungsserver (4A) den Mobile IP Schlüssel nur dann bereitstellt, wenn der Authentisierungsserver (4A) anhand eines entsprechend kodierten Parameters (P) erkennt, dass das Teilnehmer-Endgerät (1) selbst Mobile IP nicht einsetzt (PMIP).

2. Verfahren nach Anspruch 1,
wobei der kodierte Parameter (P) durch eine kodierte Teilnehmeridentität, Network Access Identifier (NAI), gebildet wird.

3. Verfahren nach Anspruch 1,
wobei der Authentisierungsserver (4A) durch einen AAA-Authentisierungsserver gebildet wird.

4. Verfahren nach Anspruch 2, wobei die kodierte Teilnehmeridentität (NAI) in einer Nachricht während einer Authentisierung des Teilnehmer-Endgeräts (1) an den Authentisierungsserver (4A) übertragen wird.

5. Verfahren nach Anspruch 2,
wobei die kodierte Teilnehmeridentität (NAI) in einer Nachricht während einer Registrierung des Teilnehmer-Endgeräts (1) an den Authentisierungsserver (4A) übertragen wird.

6. Verfahren nach Anspruch 1,
wobei der kodierte Parameter (P) durch einen kodierten Security Parameter Index (SPI) gebildet wird.

7. Verfahren nach Anspruch 6,
wobei der kodierte Security Parameter Index während einer Registrierung des Teilnehmer-Endgeräts (1) an den Authentisierungsserver (4A) übertragen wird.

8. Verfahren nach Anspruch 1,
wobei die Kodierung des Parameters (P) durch das mobile Endgerät (1) erfolgt.

9. Verfahren nach Anspruch 1,
wobei die Kodierung des Parameters (P) durch einen Authentikator (5A) erfolgt.

10. Verfahren nach Anspruch 1,
wobei die Kodierung des Parameters (P) durch einen PMIP Client (5C) erfolgt.

11. Verfahren nach Anspruch 1,
wobei die Kodierung des Parameters (P) durch einen Fremdagenten (5B) erfolgt.

12. Verfahren nach Anspruch 1,
wobei zusätzlich in den Parameter (P) einkodiert wird, welche MIP-Version vorliegt.

13. Verfahren nach Anspruch 1,
wobei der Heimagent (4B) unter Angabe des kodierten Parameters (P) den Mobile IP Schlüssel bei dem Authentisierungsserver (4A) anfordert.

14. Verfahren nach Anspruch 1,
wobei der Authentisierungsserver (4A) zwei unterschiedliche MIP Schlüssel bereitstellt, wobei dem Heimagenten (4B) durch den Authentisierungsserver (4A) ein erster CMIP-Schlüssel bereitgestellt wird, wenn das mobile Endgerät (1) selbst Mobile IP einsetzt, und
wobei dem Heimagenten (4B) durch den Authentisierungsserver (4A) ein zweiter PMIP Schlüssel bereitgestellt wird, wenn das mobile Endgerät (1) selbst Mobile IP nicht einsetzt.

15. Verfahren nach Anspruch 1,
wobei der Authentisierungsserver (4A) in Abhängigkeit von einem Mobile IP Root-Schlüssel und von einer Zeichenkette einen Hashwert unter Verwendung einer Hash-Funktion H berechnet, der als Mobile IP Schlüssel bereitgestellt wird.

16. Verfahren nach Anspruch 15,
wobei die Zeichenkette aus verketteten Unterzeichenketten zusammengesetzt wird.

17. Verfahren nach Anspruch 16,
wobei eine Unterzeichenkette durch eine IP-Adresse des Heimagenten (4B) gebildet wird.

18. Verfahren nach Anspruch 2,
wobei die Teilnehmeridentität (NAI) folgendes Datenformat aufweist:
[Routing Realm1! Routing Realm2!...!] {Auth Mode} pseudo Identitiy @realm,
wobei die Pseudo Identity eine durch das Endgerät (1) bei der Authentisierung erzeugte Zufallszahl ist und
wobei Auth Mode ein Zeichen ist, welches einen Authentisierungsmodus angibt.

19. Verfahren nach Anspruch 18,
wobei die kodierte Teilnehmeridentität (NAI) den Authentisierungsmodus (Auth Mode) um mindestens ein Zeichen erweitert, welches angibt, ob das Teilnehmer-Endgerät (1) selbst Mobile IP einsetzt.

20. System zum Bereitstellen eines Mobile IP Schlüssels, der zur Verschlüsselung von Nachrichten zwischen einem Teilnehmerendgerät (1) oder einem PMIP Client (5C) und einem Heimagenten (4B) vorgesehen ist,
wobei ein Authentisierungsserver (4A) den Mobile IP Schlüssel nur dann bereitstellt, wenn der Authentisierungsserver (4A) anhand eines entsprechend kodierten Parameters (P) erkennt, dass das Teilnehmer-Endgerät (1) selbst Mobile IP nicht einsetzt (PMIP).

21. System nach Anspruch 20,
wobei der kodierte Parameter (P) eine kodierte Teilnehmeridentität (NAI) ist.

22. System nach Anspruch 20,
wobei der kodierte Parameter (P) ein kodierter Security Parameter Index (SPI) ist.

## Claims

1. Method for providing a Mobile IP key which is provided for encrypting messages between a subscriber terminal (1) or a PMIP client (5C) and a home agent (4B),
wherein an authentication server (4A) only provides the Mobile IP key if the authentication server (4A) recognises on the basis of a correspondingly encoded parameter (P) that the subscriber terminal (1) itself does not use Mobile IP (PMIP).

2. Method according to claim 1,
wherein the encoded parameter (P) is formed by means of an encoded subscriber identity, Network Access Identifier (NAI).

3. Method according to claim 1,
wherein the authentication server (4A) is formed by means of an AAA authentication server.

4. Method according to claim 2,
wherein the encoded subscriber identity (NAI) is transmitted to the authentication server (4A) in a message during an authentication of the subscriber terminal (1).

5. Method according to claim 2,
wherein the encoded subscriber identity (NAI) is transmitted to the authentication server (4A) in a message during a registration of the subscriber terminal (1).

6. Method according to claim 1,
wherein the encoded parameter (P) is formed by means of an encoded security parameter index (SPI).

7. Method according to claim 6,
wherein the encoded security parameter index is transmitted to the authentication server (4A) during a registration of the subscriber terminal (1).

8. Method according to claim 1,
wherein the parameter (P) is encoded by the mobile terminal (1).

9. Method according to claim 1,
wherein the parameter (P) is encoded by an authenticator (5A).

10. Method according to claim 1,
wherein the parameter (P) is encoded by a PMIP client (5C).

11. Method according to claim 1,
wherein the parameter (P) is encoded by a foreign agent (5B).

12. Method according to claim 1,
wherein information indicating which MIP version is present is additionally encoded in the parameter (P).

13. Method according to claim 1,
wherein the home agent (4B) requests the Mobile IP key from the authentication server (4A), specifying the encoded parameter (P) in the process.

14. Method according to claim 1,
wherein the authentication server (4A) provides two different MIP keys, wherein the home agent (4B) is provided with a first CMIP key by the authentication server (4A) if the mobile terminal (1) itself uses Mobile IP, and
wherein the home agent (4B) is provided with a second PMIP key by the authentication server (4A) if the mobile terminal (1) itself does not use Mobile IP.

15. Method according to claim 1,
wherein the authentication server (4A) uses a hash function H to calculate a hash value on the basis of a Mobile IP root key and a character string, said hash value being provided as the Mobile IP key.

16. Method according to claim 15,
wherein the character string is composed of concatenated character substrings.

17. Method according to claim 16,
wherein one character substring is formed by an IP address of the home agent (4B).

18. Method according to claim 2,
wherein the subscriber identity (NAI) has the following data format:
[Routing Realm1! Routing Realm2!...!] {Auth Mode} pseudo Identity @realm,
where the pseudo identity is a random number generated by the terminal (1) during the authentication and
where Auth Mode is a character which specifies an authentication mode.

19. Method according to claim 18,
wherein the encoded subscriber identity (NAI) extends the authentication mode (Auth Mode) by at least one character which specifies whether the subscriber terminal (1) itself uses Mobile IP.

20. System for providing a Mobile IP key which is provided for encrypting messages between a subscriber terminal (1) or a PMIP client (5C) and a home agent (4B),
wherein an authentication server (4A) only provides the Mobile IP key if the authentication server (4A) recognises on the basis of a correspondingly encoded parameter (P) that the subscriber terminal (1) itself does not use Mobile IP (PMIP).

21. System according to claim 20,
wherein the encoded parameter (P] is an encoded subscriber identity (NAI).

22. System according to claim 20,
wherein the encoded parameter (P) is an encoded security parameter index (SPI).

## Revendications

1. Procédé de fourniture d'une clé IP Mobile prévue pour le cryptage de messages entre un terminal d'usager (1) ou un client PMIP (5C) et un agent d'attache (4B),
un serveur d'authentification (4A) ne fournissant la clé IP Mobile que si le serveur d'authentification (4A) reconnaît, à l'aide d'un paramètre (P) codé en conséquence, que le terminal d'usager (1) n'utilise (PMIP) pas lui-même l'IP Mobile.

2. Procédé selon la revendication 1, le paramètre codé (P) étant formé par une identité d'usager codée, Network Access Identifier (NAI).

3. Procédé selon la revendication 1, le serveur d'authentification (4A) étant formé par un serveur d'authentification AAA.

4. Procédé selon la revendication 2, l'identité d'usager codée (NAI) étant transmise au serveur d'authentification (4A) dans un message pendant une authentification du terminal d'usager (1).

5. Procédé selon la revendication 2, l'identité d'usager codée (NAI) étant transmise au serveur d'authentification (4A) dans un message pendant un enregistrement du terminal d'usager (1).

6. Procédé selon la revendication 1, le paramètre codé (P) étant formé par un Security Parameter Index (SPI) codé.

7. Procédé selon la revendication 6, le Security Parameter Index codé étant transmis au serveur d'authentification (4A) pendant un enregistrement du terminal d'usager (1).

8. Procédé selon la revendication 1, le codage du paramètre (P) étant effectué par le terminal mobile (1).

9. Procédé selon la revendication 1, le codage du paramètre (P) étant effectué par un authentificateur (5A).

10. Procédé selon la revendication 1, le codage du paramètre (P) étant effectué par un client PMIP (5C).

11. Procédé selon la revendication 1, le codage du paramètre (P) étant effectué par un agent étranger (5B).

12. Procédé selon la revendication 1, étant entendu qu'il est additionnellement codé, dans le paramètre (P), quelle version MIP on a.

13. Procédé selon la revendication 1, l'agent d'attache (4B) demandant, en indiquant le paramètre codé (P), la clé IP Mobile au serveur d'authentification (4A).

14. Procédé selon la revendication 1, le serveur d'authentification (4A) fournissant deux clés MIP différentes, l'agent d'attache (4B) étant fournie, par le serveur d'authentification (4A), une première clé CMIP lorsque le terminal mobile (1) lui-même utilise l'IP Mobile, et l'agent d'attache (4B) étant fournie, par le serveur d'authentification (4A), une deuxième clé PMIP lorsque le terminal mobile (1) lui-même n'utilise pas l'IP Mobile.

15. Procédé selon la revendication 1, le serveur d'authentification (4A) calculant, en fonction d'une clé racine IP Mobile et d'une chaîne de signes et en utilisant une fonction de hachage H, une valeur de hachage qui est fournie en tant que clé IP Mobile.

16. Procédé selon la revendication 15, la chaîne de signes étant composée de sous-chaînes de signes concaténées.

17. Procédé selon la revendication 16, une sous-chaîne de signes étant formée par une adresse IP de l'agent d'attache (4B).

18. Procédé selon la revendication 2, l'identité d'usager (NAI) présentant le format de données suivant :
[Routing Realml! Routing Realm2! ... !] {Auth Mode} pseudo Identitiy @realm,
la Pseudo Identity étant un nombre aléatoire généré par le terminal (1) lors de l'authentification et
Auth Mode étant un signe qui indique un mode d'authentification.

19. Procédé selon la revendication 18, l'identité d'usager codée (NAI) élargissant le mode d'authentification (Auth Mode) par au moins un signe qui indique si le terminal d'usager (1) lui-même utilise l'IP Mobile.

20. Système de fourniture d'une clé IP Mobile prévue pour le cryptage de messages entre un terminal d'usager (1) ou un client PMIP (5C) et un agent d'attache (4B),
un serveur d'authentification (4A) ne fournissant la clé IP Mobile que si le serveur d'authentification (4A) reconnaît, à l'aide d'un paramètre (P) codé en conséquence, que le terminal d'usager (1) n'utilise (PMIP) pas lui-même l'IP Mobile.

21. Système selon la revendication 20, le paramètre codé (P) étant une identité d'usager codée (NAI).

22. Système selon la revendication 20, le paramètre codé (P) étant un Security Parameter Index (SPI) codé.
